# EUROPEAN PATENT APPLICATION

(11) **EP 2 381 383 A1**
(43) Date of publication of application: **26.10.2011**
(21) Application number: 09838223.7
(22) Date of filing: 12.11.2009
(51) Int. Cl.: G06F 21/20

(54) **SERVER AUTHENTICATION METHOD AND CLIENT TERMINAL**

(30) Priority: 16.01.2009 JP 2009007723
(71) Applicant: Panasonic Corporation, Kadoma-shi Osaka 571-8501 (JP)
(72) Inventor: ANZAI, Jun, Osaka-shi, Osaka 540-6207 (JP); NAKAMURA, Tomoharu, Osaka-shi, Osaka 540-6207 (JP)
(74) Representative: Grünecker, Kinkeldey, Stockmair & Schwanhäusser
(86) International application number: PCT/JP2009/006062
(87) International publication number: WO 2010/082253

(57) **Abstract**

Provided is a server authentication method capable of reliably detecting a dangerous site.

A verification client terminal 400 establishes a secure communication path (SSL) with an evaluated server 200 and receives a public key of the evaluated server 200 during establishment (S22). Then, the verification client terminal 400 transmits an ID (A1) to the evaluated server 200 through an SSL (S25). Then, the verification client terminal 400 receives an ID (A2) and a random number (B1) from the evaluated server 200 through the SSL (S27). When the received random number (B1) corresponds to the transmitted ID (A1) and a public key which is stored in a public key management unit 401 managing the public key in advance is identical to the received public key, it is determined that the evaluated server 200 is valid. When it is determined that the evaluated server 200 is valid, the verification client terminal 400 transmits a random number (B2) corresponding to an ID (A2) to the evaluated server 200 through the SSL (S31).

## Description

### Technical Field

The present invention relates to a server authentication method and a client terminal for detecting a dangerous site, such as a fraudulent site or a harmful site.

### Background Art

In recent years, fraudulent sites, such as phishing sites or one-click fraud sites, and harmful sites, such as suicide sites or child-porn sites, have become social problems. In the specification, the fraudulent sites and the harmful sites are referred to as dangerous sites.

The dangerous sites include fraudulent sites and harmful sites, and the fraudulent sites include spoofing sites, tampering sites, and clone sites. The spoofing site means a site having content or a URI (Uniform Resource Identifier) similar to that of the existing regular site. The tampering site is a regular site tampered with for a fraudulent purpose and is, for example, a site obtained by inserting the URI of the phishing site to the iframe of the regular site. The clone site is a site having completely the same content and URI as those of the existing regular site and is, for example, a site that uses DNS vulnerability and has a fake URI. The harmful site is a site which a number of users would not want to browse or would not recommend to browse.

A basic measure against a fraudulent site is to check the domain name of the site. However, in many cases, the domain name of a fraudulent site is similar to that of the regular site and the expert user is likely to mistake a fraudulent site for the regular site. In addition, since a fraudulent site uses the vulnerability of a DNS server, the regular domain is likely to be seized over a limited range. The user can evaluate the content of a site to determine whether the site is a harmful site. However, merely connecting to a harmful site makes the user uncomfortable. Therefore, it is preferable to prevent connection to harmful sites.

As a measure against dangerous sites according to the related art, a system has been put into practical use which automatically compares a URI with a predetermined list during site connection, thereby evaluating the URI. A filtering method has been mainly used which uses a black/white list issued by a private company, which is a TTP (Trusted Third Party). In addition, a site evaluation system based on the WoT (Web of Trust) concept, which trusts the evaluation of acquaintances or a plurality of users, has been used on the basis of the danger or a paid service relying on private companies.

It is possible to detect a spoofing site by evaluating a public key certificate (hereinafter, simply referred to as a public key) among the dangerous sites.

In the system using the TTP, an EV-SSL (Extended Validation SSL) that issues a server certificate to TLS (Transport Layer Security)/SSL (Secure Socket Layer) according to a strict procedure is used to detect spoofing sites. For example, when a browser accesses a site, a technique has been known which accesses a site evaluation information database to perform filtering (for example, see Patent Document 1 ).

In the WoT system, a plurality of public key caches stored in a plurality of servers are compared with each other using Tofu (Trust-on-first-use) concept that trusts the public key of an initially accessed site, thereby evaluating a signature public key. In this way, a spoofing site is detected. For example, a technique has been proposed in which a public key site is registered in a plurality of cache servers and a public key acquired from the site during the site authentication is compared with the public keys of the cache servers to detect spoofing sites (for example, see Non-Patent Document 1).

### Related Art Document(s)

### Patent Document(s)

Patent Document 1: US 2007/0294339 A1

### Non-Patent Document(s)

Non-Patent Document 1: D. Wendlandt et al, "Perspectives: Improving SSH-style Host Authentication with Multi-Path Probing," In Proc. 2008 USENIX Annual Technical Conference, June 2008

### Summary of the Invention

### Problem to be Solved by the Invention

However, in the technique disclosed in Patent Document 1, a database server (evaluation information server) that caches reliable evaluation information is needed and it is difficult to check the validity of the site evaluation information. In addition, it is difficult to detect a clone site that copies all content including the public key.

In the technique disclosed in Patent Document 2, a cache server corresponding to the evaluation information server is needed. For the public key that is registered in the cache server once, when the public key is not registered again, it is difficult for the site to update the public key. In addition, a plurality of cache servers with a predetermined degree of reliability is needed. Since the EV-SSL is issued only to a corporation that can be actually identified, individuals cannot use the EV-SSL. In addition, it is difficult to detect a tampering site or a clone site.

The invention has been made in view of the above-mentioned problems, and an object of the invention is to provide a server authentication method and a client terminal capable of reliably detecting a dangerous site.

### Means for Solving the Problem

A server authentication method of the invention is a server authentication method in a communication system including an evaluated server, which is targeted for evaluation, and a client terminal capable of communicating with the evaluated server, the server authentication method including: a step, performed by the client terminal establishing a secure communication path with the evaluated server and receiving a public key of the evaluated server during the establishment; a step, performed by the client terminal, of transmitting a first ID to the evaluated server through the secure communication path; a step, performed by the client terminal, of receiving a second ID and a first random number from the evaluated server through the secure communication path; a step, performed by the client terminal, of determining that the evaluated server is valid when the received first random number corresponds to the transmitted first ID and a public key stored in a public key management unit configured to manage the public key in advance is identical to the received public key; and a step, performed by the client terminal, of transmitting a second random number corresponding to the second ID to the evaluated server through the secure communication path when the evaluated server is determined to be valid.

According to this method, it is possible to detect a dangerous site (in particular, a spoofing site and a clone site). Specifically, since the identity between the public keys is checked, it is possible to detect a spoofing site. Since the random numbers or the IDs used in the communication between the evaluated server and the client terminal are updated each time the evaluated server and the client terminal are connected to each other, it is possible to detect a clone site that temporarily acquires an ID or a random number.

The server authentication method of the invention further includes: a step, performed by the client terminal, of receiving the first ID from the evaluated server through the secure communication path when the client terminal requests access to the evaluated server for the first time; and a step, performed by the client terminal, of transmitting the first random number corresponding to the first ID to the evaluated server through the secure communication path.

According to this method, during the first connection between the evaluated server and the client terminal, the client terminal can store the ID and the evaluated server can store the random number.

The server authentication method of the invention further includes: a step, performed by the evaluated server, of calculating a hash value for each kind of content stored in a content storage unit; a step, performed by the evaluated server, of calculating a signature from the calculated hash value based on the public key of the evaluated server and transmitting the signature together with the content; a step, performed by the client terminal, of receiving the signature and the content; a step, performed by the client terminal, of calculating the hash value of the received content; and a step, performed by the client terminal, of decoding the received content when the received signature is determined to be valid by verifying the received signature using the calculated hash value and the public key stored in the public key management unit in advance.

According to this method, it is possible to detect a tampering site. In addition, when a tampering site is detected, the content is not decoded. Therefore, the security of the client terminal is improved.

The server authentication method of the invention further includes: a step, performed by the client terminal, of acquiring evaluating server identification information for identifying an evaluating server configured to store an evaluation result of the evaluated server from the evaluated server; a step, performed by the client terminal, of acquiring the evaluation result of the evaluated server from the evaluating server based on the evaluating server identification information; and a step, performed by the client terminal, of determining whether to permit access to the evaluated server based on the acquired evaluation result of the evaluated server and a predetermined security policy.

According to this method, it is possible to detect a harmful site. Specifically, the client terminal stores an independent security policy in advance and determines whether an evaluated site is a harmful site with reference to the security policy.

The server authentication method of the invention further includes: a step, performed the client terminal, of transmitting evaluation result identification information for identifying the evaluation result, which is targeted for evaluation, and a third random number to an evaluating terminal configured to evaluate the evaluated server by e-mail; a step, performed by the client terminal, of storing the third random number in an evaluation result storage unit configured to store the evaluation result and the evaluation result identification information; a step, performed by the evaluating terminal, of receiving the evaluation result identification information and the third random number by e-mail; a step, performed by the evaluating terminal, of calculating hash values of the evaluation result corresponding to the evaluation result identification information, the evaluation result identification information, and the received third random number; a step, performed by the evaluating terminal, of transmitting the hash values to the client terminal by e-mail; a step, performed by the client terminal, of receiving the hash values by e-mail; a step, performed by the client terminal, of calculating the hash values of the evaluation result, the evaluation result identification information, and the third random number stored in the evaluation result storage unit; and a step, performed by the client terminal, of determining that the evaluation result is valid when the hash values received by e-mail are identical to the calculated hash values and a domain of a destination e-mail address is valid.

According to this method, it is possible to check the validity of the evaluation result of the evaluated server 200 by comparing the hash values or determining whether the domain of the destination e-mail address is valid. Specifically, it is checked that "the creator of the evaluation result of a target (not a robot, such as a bot) is the user of a mobile phone".

The server authentication method of the invention further includes: a step, performed by the evaluating terminal configured to evaluate the evaluated server, of transmitting the evaluation result to the evaluating server.

According to this method, the evaluating terminal evaluates the evaluated server and uploads the evaluation result to the evaluating server. Therefore, the client terminal communicating with the evaluated server can acquire the evaluation result from the evaluating server in order to check whether the server is a dangerous site.

In the server authentication method of the invention, the evaluating terminal is a mobile phone terminal.

According to this method, since the evaluating terminal is a mobile phone terminal with high reliability, the check result of the validity of the evaluation result has high reliability.

A client terminal of the invention is a client terminal capable of communicate with an evaluated server which is targeted for evaluation, the client terminal includes: a public key receiving unit configured to establish a secure communication path with the evaluated server and to receive a public key of the evaluated server during the establishment; a transmitting unit configured to transmit a first ID to the evaluated server through the secure communication path; an ID/random number receiving unit configured to receive a second ID and a first random number from the evaluated server through the secure communication path; and a determining unit configured to determine that the evaluated server is valid when the first random number received by the ID/random number receiving unit corresponds to the first ID transmitted by the transmitting unit and a public key stored in a public key management unit configured to the public key in advance is identical to the public key received by the public key receiving unit, wherein when the evaluated server is determined to be valid, the transmitting unit transmits a second random number corresponding to the second ID to the evaluated server through the secure communication path.

According to this structure, it is possible to reliably detect a dangerous site (in particular, a spoofing site and a clone site). Specifically, since the identity between the public keys is checked, it is possible to detect a spoofing site. Since the random numbers or the IDs used in the communication between the evaluated server and the client terminal are updated each time the evaluated server and the client terminal are connected to each other, it is possible to detect a clone site that temporarily acquires an ID or a random number.

### Advantages of the Invention

According to the invention, it is possible to reliably detect a dangerous site.

### Brief Description of the Drawings

Fig. 1 is a block diagram illustrating an example of the structure of a dangerous site detecting system according to an embodiment of the invention.
Fig. 2 is a flowchart illustrating the outline of the operation of a dangerous site detecting system according to a first embodiment of the invention.
Fig. 3 is a block diagram illustrating an example of the detailed structure of an evaluated server according to the first embodiment of the invention.
Fig. 4 is a block diagram illustrating an example of the detailed structure of a verification client terminal according to the first embodiment of the invention.
Fig. 5 is a block diagram illustrating an example of the detailed structure of an evaluating client terminal according to the first embodiment of the invention.
Fig. 6 is a flowchart illustrating an example of a process of evaluating the evaluated server according to the first embodiment of the invention.
Fig. 7 is a flowchart illustrating an example of a dangerous site detecting process according to the first embodiment of the invention.
Fig. 8 is a flowchart illustrating an example of the dangerous site detecting process according to the first embodiment of the invention.
Fig. 9 is a sequence diagram illustrating an example of the flow of data during the first connection between the evaluated server and the verification client terminal in the first embodiment of the invention.
Fig. 10 is a sequence diagram illustrating an example of the flow of data during the second and subsequent connection between the evaluated server and the verification client terminal in the first embodiment of the invention.
Fig. 11 is a block diagram illustrating an example of the detailed structure of an evaluating client terminal according to a second embodiment of the invention.
Fig. 12 is a block diagram illustrating an example of the detailed structure of a verification client terminal according to the second embodiment of the invention.
Fig. 13 is a flowchart illustrating an example of a process of checking the evaluation result according to the second embodiment of the invention.
Fig. 14 is a flowchart illustrating an example of the process of checking the evaluation result according to the second embodiment of the invention.

### Mode for Carrying Out the invention

Hereinafter, a server authentication method and a client terminal according to exemplary embodiments of the invention will be described in detail with reference to the accompanying drawings.

In the following embodiments, it is assumed that a server is in one-to-one correspondence with a site managed by the server. In practice, one physical server or a plurality of physical servers may manage one site. In addition, even when one physical server actually manages a plurality of sites, it is regarded that one server manages one site. That is, the user accesses a given server to access the site managed by the server. In addition, the user designates the identification information of a given server to designate the identification information of the site managed by the server. The evaluation information of a given server is the evaluation information of the site managed by the server.

### (First embodiment)

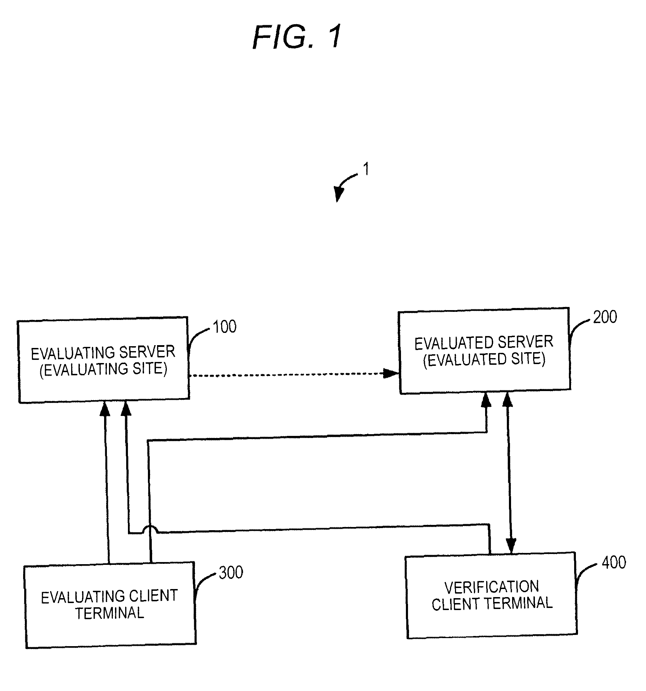

Fig. 1 is a block diagram illustrating an example of the structure of a dangerous site detecting system according to a first embodiment of the invention. A dangerous site detecting system 1 shown in Fig. 1 includes an evaluating server 100, an evaluated server 200, an evaluating client terminal 300, and a verification client terminal 400.

The evaluating server 100 has the evaluation information (which will be described below) of the evaluated server 200 and is, for example, a Blog server. The evaluating server manages an evaluating site.

The evaluated server 200 is evaluated by the evaluating client terminal 300 and is, for example, a Blog server. The evaluated server 200 manages an evaluated site. In each embodiment, the evaluation of the evaluated server 200 is the evaluation of the evaluated site.

The evaluating client terminal 300 evaluates the evaluated server 200 and transmits the evaluation result to the evaluating server 100. The evaluating client terminal 300 is, for example, a mobile phone terminal.

The verification client terminal 400 accesses the evaluating server 100 to acquire the evaluation information of the evaluated server 200 and compares the evaluation information with an independent security policy to determine whether to permit access to the evaluated server 200. The verification client terminal 400 can access the evaluated server 200 only when it is determined that access to the evaluated server 200 is permitted. The verification client terminal 400 is, for example, a PC or a mobile phone terminal. The verification client terminal 400 is an example of a client terminal that can communicate with the evaluated server 200.

Next, the outline of the operation of the dangerous site detecting system 1 will be described.

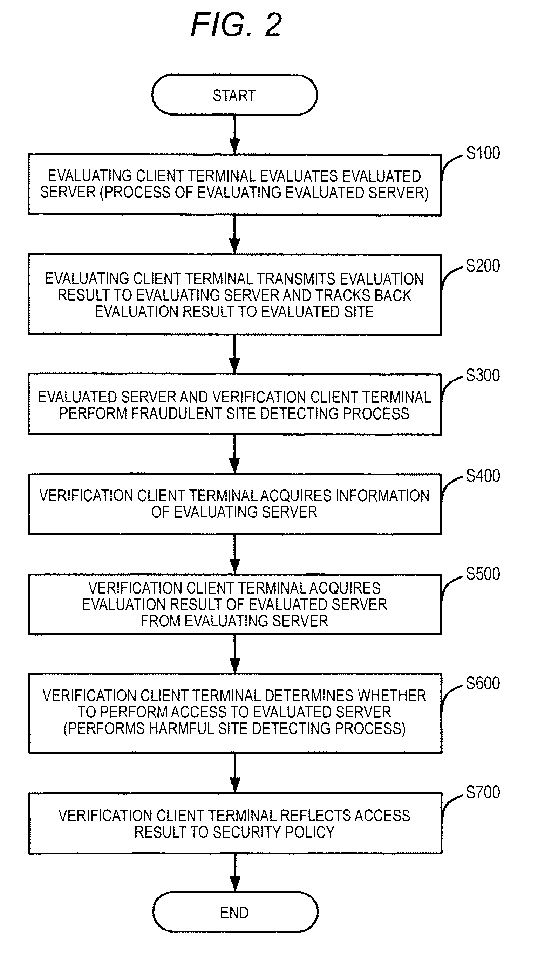

Fig. 2 is a flowchart illustrating the outline of the operation of the dangerous site detecting system 1.

First, the evaluating client terminal 300 performs a process of evaluating the evaluated server 200 (evaluated site) (Step S100). The evaluation process will be described in detail below.

Then, the evaluating client terminal 300 transmits the evaluation result of the evaluation process for the evaluated server 200 to the evaluating server 100. Then, the evaluating server 100 stores the evaluation result of the evaluated server 200 which is acquired from the evaluating client terminal 300 and tracks back the evaluation result to the evaluated server 200 (Step S200). The tracking-back means that the evaluating server 100 notifies the evaluated server 200 that the evaluating server 100 stores the evaluation result of the evaluated server 200. For example, a link to the evaluation information of the evaluated server 200 is generated on the evaluated site which is managed by the evaluated server 200. The tracking-back technique is provided in a general Blog server.

Then, the verification client terminal 400 accesses the evaluated server 200 and performs a fraudulent site detecting process (Step S300). The fraudulent site detecting process will be described in detail below. In the fraudulent site detecting process, for example, the verification client terminal 400 evaluates a server public key of the evaluated server 200 to check whether the evaluated site is a spoofing site and a clone site or verifies a signature corresponding to the expectation value hash (hash value) of content provided by the evaluated server 200 to check whether the evaluated site is a tampering site.

Then, when the evaluated site is not a fraudulent site, the verification client terminal 400 acquires the information (for example, site identification information, such as the URI of the evaluating site) of the evaluating server 100 storing the evaluation result from the evaluated site (Step S400). In this case, a public key certificate locally cached in the client terminal or a cache on a P2P network is also considered. However, it is difficult to use the cache and it is necessary to acquire a public key from the evaluation information only during first connection. Therefore, it is necessary to access the evaluated site before it is verified that the evaluated site is not a fraudulent site. For this reason, the browser requests connection determination to the system when it is connected to the evaluated site and is connected to the evaluated site only when the system permits the connection. It is assumed that the system is operated in a memory space different from that of the browser and cannot access another memory space from the memory space of a proposed system.

Then, the verification client terminal 400 accesses the evaluating server 100 and acquires the evaluation result of the evaluated server 200 which is stored in the evaluating server 100 (Step S500). In this case, the verification client terminal 400 acquires the evaluation results satisfying the security policy of the verification client terminal 400 from the evaluating server 100. A plurality of evaluating servers 100 may acquire the evaluation result.

Then, the verification client terminal 400 determines whether to access the evaluated server 200 on the basis of the evaluation result of the evaluated server 200 which is acquired from the evaluating server 100 and the security policy of the verification client terminal 400 (Step S600).

Then, when the verification client terminal 400 determines to access the evaluated server 200 and actually accesses the evaluated server 200, it reflects the access result to its security policy (Step S700). Since the user of the verification client terminal 400 needs to check the access result, the access result is displayed on the verification client terminal 400 by a UI. Specifically, information for enabling the user to check whether there is a problem due to connection to the evaluated server 200 is displayed. When the user inputs an instruction with the UI, the verification client terminal 400 feeds back content to which the intention of the user is reflected to the security policy.

When the dangerous site detecting system 1 performs the process shown in Fig. 2, it is possible to reliably detect dangerous sites, such as fraudulent sites (a spoofing site, a clone site, and a tampering site) or harmful sites.

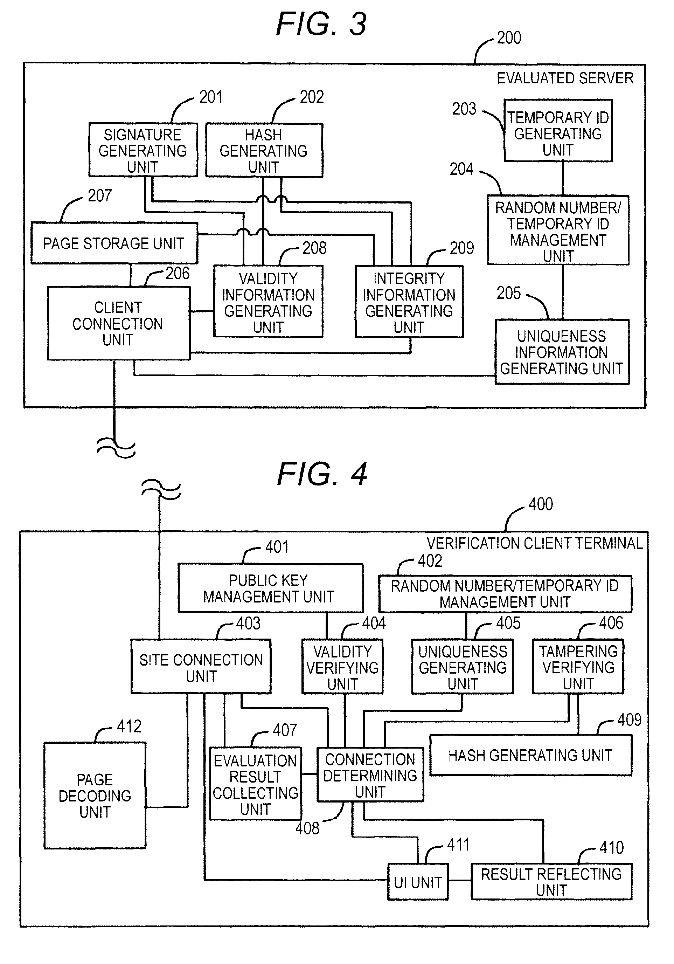

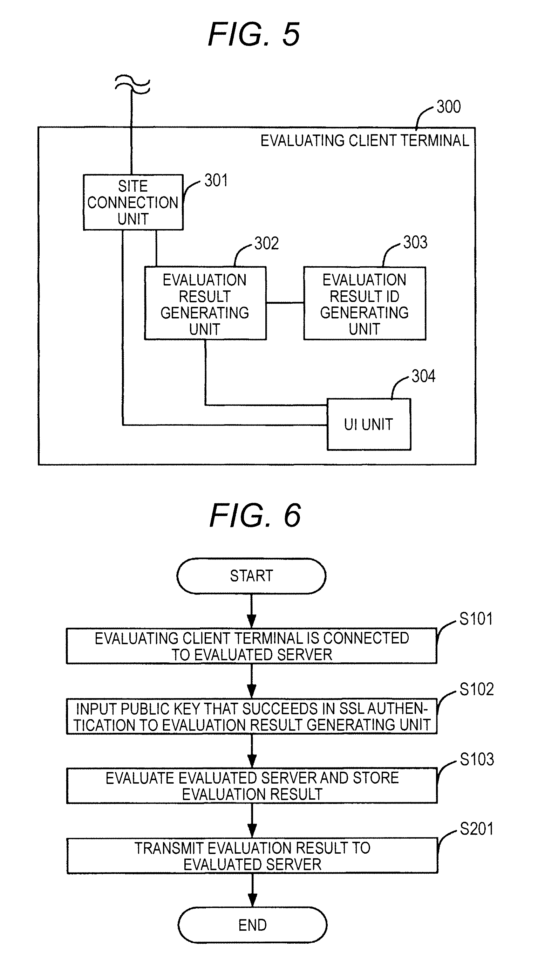

Next, the detailed structure of the structural units 100 to 400 of the dangerous site detecting system 1 will be described. Fig. 3 is a block diagram illustrating an example of the detailed structure of the evaluated server 200. Fig. 4 is a block diagram illustrating an example of the detailed structure of the verification client terminal 400. Fig. 5 is a block diagram illustrating an example of the detailed structure of the evaluating client terminal 300.

Although not shown in detail in the drawings, the evaluating server 100 has the same structure as a general server for providing information to the client terminal.

The evaluated server 200 includes a signature generating unit 201, a hash generating unit 202, a temporary ID generating unit 203, a random number/temporary ID management unit 204, a uniqueness information generating unit 205, a client connection unit 206, a page storage unit 207, a validity information generating unit 208, and an integrity information generating unit 209.

The signature generating unit 201 generates signature information for guaranteeing the integrity of various kinds of content provided by the evaluated server 200.

The hash generating unit 202 performs an operation on various kinds of content provided by the evaluated server 200 with a predetermined hash function to calculate a hash value.

The temporary ID generating unit 203 generates temporary IDs (A1, A2, ...).

The random number/temporary ID management unit 204 stores random numbers (B1, B2, ...) received by the client connection unit 206. In addition, the random number/temporary ID management unit 204 stores the temporary IDs generated by the temporary ID generating unit 203.

The uniqueness information generating unit 205 acquires the random number corresponding to the temporary ID transmitted from the verification client terminal 400 as uniqueness information from the random number/temporary ID management unit 204. The uniqueness information is used to detect a clone site.

The client connection unit 206 is for connection to a communication line for communicating with another server or various kinds of client terminals.

The page storage unit 207 stores various kinds of content provided by the evaluated server 200 in a predetermined unit (for example, in a page unit).

The validity information generating unit 208 generates information (validity information) required for an SSL to authenticate a server. The validity information is used to detect a spoofing site.

The integrity information generating unit 209 generates the hash value of content having a signature added thereto as integrity information. The integrity information is used to detect a tampering site.

The verification client terminal 400 includes a public key management unit 401, a random number/temporary ID management unit 402, a site connection unit 403, a validity verifying unit 404, a uniqueness verifying unit 405, a tampering verifying unit 406, an evaluation result collecting unit 407, a connection determining unit 408, a hash generating unit 409, a result reflecting unit 410, a UI unit 411, and a page decoding unit 412.

The structural units 401, 402, and 404 to 411 of the verification client terminal 400 other than the site connection unit 403 and the page decoding unit 412 (a structural unit serving as a browser) are provided in an independent secure space.

The public key management unit 401 stores and manages the public key used by the evaluated server 200. In this way, in this embodiment, the public key of the evaluated server 200 is stored in a local cache.

The random number/temporary ID management unit 402 generates random numbers and stores the random numbers. In addition, the random number/temporary ID management unit 402 stores the temporary ID received by the site connection unit 403.

The site connection unit 403 is for connection to a communication line for communicating with various kinds of servers or another client terminal.

The validity verifying unit 404 verifies whether the evaluated site which is managed by the evaluated server 200 is a spoofing site on the basis of the received validity information.

The uniqueness verifying unit 405 verifies whether the evaluated site which is managed by the evaluated server 200 is a clone site on the basis of the received uniqueness information.

The tampering verifying unit 406 verifies whether the evaluated site which is managed by the evaluated server 200 is a tampering site on the basis of the received integrity information.

The evaluation result collecting unit 407 stores the evaluation result of the evaluated server 200. The evaluation result collecting unit 407 can store a plurality of evaluation results acquired from a plurality of evaluating servers 100. Since a plurality of evaluation results of the same evaluation target is stored, the reliability of the evaluation result increases.

The connection determining unit 408 performs connection determination on the basis of a predetermined security policy, thereby determining whether the evaluated site which is managed by the evaluated server 200 is a harmful site.

The security policy includes an evaluation policy, a verification policy, and a connection policy. The evaluation policy includes the information of the available period, a category, a keyword (which is used to extract a word for guessing a category from the comment of the evaluation result), and the acquisition destination of the evaluation result, which are standards for determining the effectiveness of the evaluation result. The verification policy includes the information of the number of valid public key caches, tampering content, the available period of the random numbers for detecting a clone site, which are standards for determining the validity of the verification result obtained by the verifying units 404 to 406. The connection policy includes the information of the number of valid samples and a connection permission threshold value required to perform connection determination on the basis of the evaluation result and the verification result obtained by the verifying units 404 to 406.

The hash generating unit 409 performs an operation on various kinds of content provided by the evaluated server 200 with a predetermined hash function to calculate a hash value.

The result reflecting unit 410 updates the content of the security policy on the basis of the connection determination result obtained by the connection determining unit 408. The security policy is predetermined, but it is possible to use the security policy as a desired criterion by reflecting the result using the result reflecting unit 410.

The UI unit 411 is an input unit, such as various kinds of operation keys or a microphone, or a display unit, such as a display.

The page decoding unit 412 performs a process of decoding various kinds of content (decoding process). For example, the page decoding unit 412 performs the decoding process using an HTML parser, a Jpeg decoder, and a Flash Player.

The evaluating client terminal 300 includes a site connection unit 301, an evaluation result generating unit 302, an evaluation result ID generating unit 303, and a UI unit 304.

The site connection unit 301 is for connection to a communication line for communicating with various kinds of servers or another client terminal.

The evaluation result generating unit 302 evaluates the evaluated server 200, generates the evaluation result, and stores the evaluation result. The evaluation result includes, for example, an evaluation result ID, evaluation date and time, information indicating whether to permit connection to the evaluated server 200 (connection permission value), a public key certificate (public key) of the evaluated server 200, the category of the evaluated server 200, the URI of the evaluated server 200, information (for example, a PC e-mail address or a mobile e-mail address) for identifying an evaluating client terminal, and a comment. The evaluation result ID, the evaluation date and time, and the connection permission value are indispensable information items of the evaluation result.

The evaluation result ID generating unit 303 generates an evaluation result ID as identification information for identifying the evaluation result generated by the evaluation result generating unit 302. The generated evaluation result ID and the information of other evaluation results are stored in the evaluation result generating unit 302.

The UI unit 304 is an input unit, such as various kinds of operation keys or a microphone, or a display unit, such as a display.

Next, the process of evaluating the evaluated server 200 (evaluated site) in Steps S100 and S200 will be described in detail.

Fig. 6 is a flowchart illustrating an example of the process of evaluating the evaluated server 200. In Fig. 6, Steps S101 to S103 correspond to Step S100 in Fig. 2, and Step S201 corresponds to Step S200 in Fig. 2.

First, in the evaluating client terminal 300, the site connection unit 301 is connected to the evaluated server 200 in response to an instruction input through the UI unit 304 (Step S101).

Then, in the evaluating client terminal 300, the site connection unit 301 inputs the public key by which SSL authentication between the evaluating client terminal 30 and the evaluated server 200 succeeds to the evaluation result generating unit 302 (Step S102).

Then, in the evaluating client terminal 300, the evaluation result generating unit 302 evaluates the evaluated server 200 and stores the evaluation result. In the evaluation result, information (connection permission value) indicating whether to permit connection to the evaluated server 200, the category of the evaluated server 200, and the comment are input by the UI unit 304, on the basis of instructions from the operator of the evaluating client terminal 300 (Step S103).

Then, in the evaluating client terminal 300, the site connection unit 301 transmits the evaluation result stored in the evaluation result generating unit 302 to the evaluating server 100 (Step S201).

As such, when the evaluating client terminal 300 evaluates the evaluated server 200 (evaluated site) and uploads the evaluation result to the evaluating server 100, the terminal that accesses the evaluated server 200 can acquire the evaluation result from the evaluating server 100 in order to check whether the site managed by the server is a dangerous site. In particular, since the evaluating client terminal 300 evaluates the server using a terminal with high reliability, such as a mobile phone terminal, the reliability of the evaluation result increases, as in the second embodiment.

Next, the dangerous site detecting process (the fraudulent site detecting process and the harmful site detecting process) in Steps S300 and S700 will be described in detail.

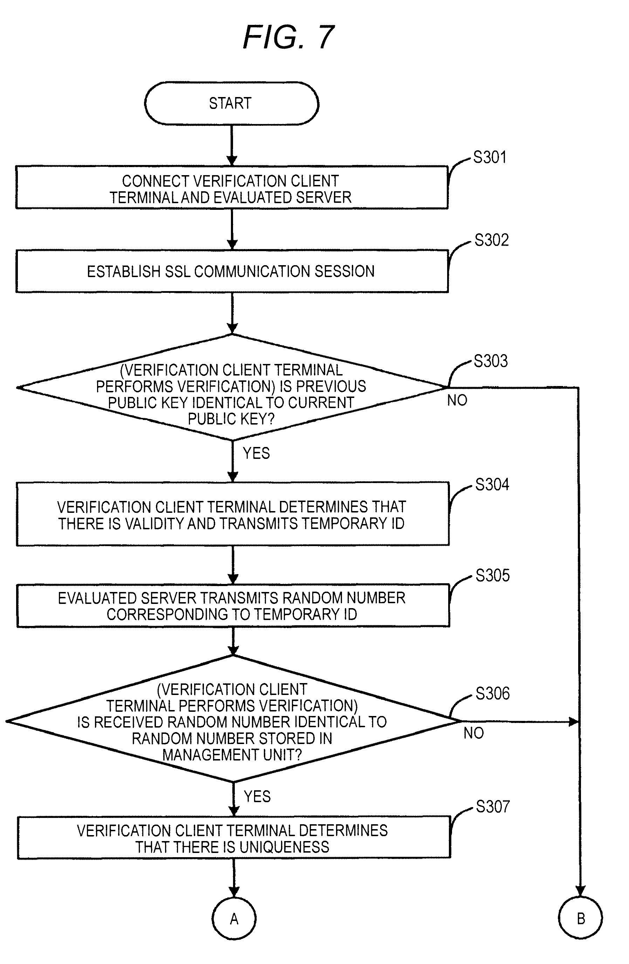

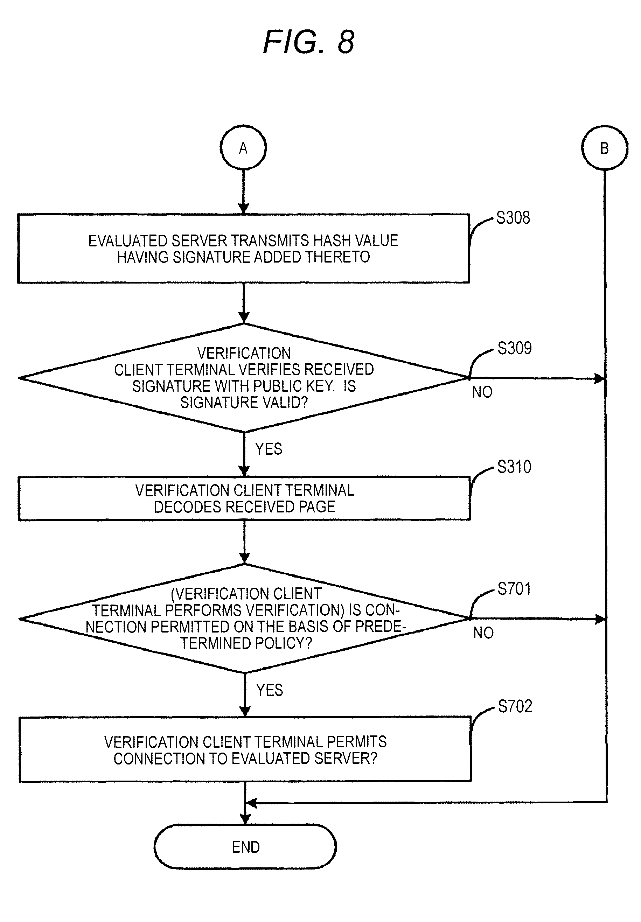

Figs. 7 and 8 are flowcharts illustrating an example of the dangerous site detecting process. In Figs. 7 and 8, Steps S31 0 to S370 are the content of the fraudulent site detecting process corresponding to Step S300 in Fig. 2, and Steps S601 and S701 are the content of the harmful site detecting process corresponding to Steps S600 and S700 in Fig. 2. Figs. 7 and 8 mainly show the operation of the evaluated server 200 and the verification client terminal 400 during the second and subsequent connection.

First, in the verification client terminal 400, the site connection unit 403 is connected to the evaluated server 200 in response to an instruction input through the UI unit 411 (Step S301).

Then, in the evaluated server 200, the validity information generating unit 208 performs an SSL process through the client connection unit 206 (Step S302). The SSL process transmits the public key of the evaluated server 200 to the verification client terminal 400 and establishes an SSL communication session between the evaluated server 200 and the verification client terminal 400. The SSL communication session is an example of a secure communication path. Steps S301 to S302 can be implemented by the same method as that in the existing technique.

Then, in the verification client terminal 400, the validity verifying unit 404 determines whether the previously used public key (however, the public key is acquired from the evaluation result for the first time, which will be described in detail below) stored in the public key management unit 401 is identical to the currently received public key (Step S303). When the public keys are identical to each other and SSL server authenticate succeeds, the validity verifying unit 404 determines that there is validity, and the site connection unit 403 acquires the temporary ID from the random number/temporary ID management unit 402 and transmits the temporary ID to the evaluated server 200 (Step S304).

As such, when Steps S301 to S303 are performed, it is possible to detect a spoofing site. When the site is not a spoofing site, it is determined in Step S304 that there is validity. When the site is a spoofing site, it is determined in Step S304 that there is no validity.

Then, in the evaluated server 200, the uniqueness information generating unit 205 acquires a random number corresponding to the temporary ID transmitted from the verification client terminal 400 from the random number/temporary ID management unit 204. Then, the client connection unit 206 transmits the acquired random number to the verification client terminal 400 (Step S305).

Then, in the verification client terminal 400, the uniqueness verifying unit 405 compares the random number stored in the random number/temporary ID management unit with the random number received by the site connection unit 403 (Step S306). When the random numbers are identical to each other, the uniqueness verifying unit 405 determines that there is uniqueness (Step S307).

As such, when Steps S304 to S306 are performed, it is possible to detect a clone site. When the site is not a clone site, it is determined in Step S307 that there is uniqueness. When the site is a clone site, it is determined in Step S307 that there is no uniqueness.

Then, in the evaluated server 200, the hash generating unit 202 acquires a page stored in the page storage unit 207 and calculates a hash value for each kind of acquired page. Then, the integrity information generating unit 209 adds the signature generated by the signature generating unit 201 to the hash value calculated by the hash generating unit 202. The client connection unit 206 transmits the hash value having the signature added thereto to the verification client terminal 400 (Step S308). The steps before the transmission step (that is, up to the step of adding the signature) are performed in advance in order to verify tampering. The kind of page is the kind of content, such as HTML, FLASH, and JPEG. When RSA is used as a digital signature method, the generation of signature means that "the hash value is encoded with a secret key which is coupled with the public key" and the verification of signature means that "the signature is decoded with the public key to obtain a predetermined hash value".

Then, in the verification client terminal 400, the hash generating unit 409 calculates a hash value for the page (received page) received by the site connection unit 403. Then, the tampering verifying unit 406 verifies the signature received by the site connection unit 403 with the public key stored in the public key management unit 401 and determines whether the signature is valid (Step S309). When it is determined that the signature is valid, the page decoding unit 412 decodes the received page (Step S310).
Specifically, the evaluated site signs (encodes) a hash value A of content with a secret key corresponding to the public key to calculate a digital signature. In Step S309, the verification client 400 verifies (decodes) the signature with the public key to acquire the hash value A. In Step S310, the verification client 400 compares a hash value A' calculated from the content which is acquired from the evaluated site with the hash value A and checks whether the hash values are identical to each other.

As such, when Steps S308 to S309 are performed, it is possible to detect a tampering site. When the site is not a tampering site, it is determined in Step S310 that the signature is valid. When the site is a tampering site, it is determined in Step S310 that the signature is valid.

Then, in the verification client terminal 400, the connection determining unit 408 integrates a plurality of evaluation results collected by the evaluation result collecting unit 407 on the basis of a predetermined evaluation policy. It is expected that the evaluation results will include different information items (information indicating whether to permit connection to the evaluated server 200 (connection permission value), the public key certificate (public key) of the evaluated server 200, the category of the evaluated server 200, and the URI of the evaluated server 200). Therefore, for numerical values, such as connection permission values, the average value thereof is calculated. In addition, for the public key, the URI, or the category other than the numerical values, the largest amount of content is examined. The average value and the largest amount of content are treated as final evaluation information.
The connection determining unit 408 integrates the verification results obtained by each verifying unit (the validity verifying unit 404, the uniqueness verifying unit 405, and the tampering verifying unit 406) on the basis of a predetermined verification policy. Then, the connection determining unit 408 determines connection to the evaluated server 200, on the basis of the integration result and a predetermined connection policy. That is, the connection determining unit 408 determines whether a predetermined security policy is satisfied (Step S701). When the predetermined security policy is satisfied, the connection determining unit 408 permits connection to the evaluated server 200 (Step S702). In addition, the result reflecting unit 410 may reflect the connection determination result to each policy.

As such, when Step S701 is performed, it is possible to detect a harmful site. When the site is not a harmful site, it is determined in Step S702 that each predetermined policy is satisfied. When the site is a harmful site, it is determined in Step S702 that each predetermined policy is not satisfied.

In this embodiment, Steps S701 and S702 are performed after Steps S301 to S310. However, Steps S301 to S31 0 may be performed after Steps S701 and S702.

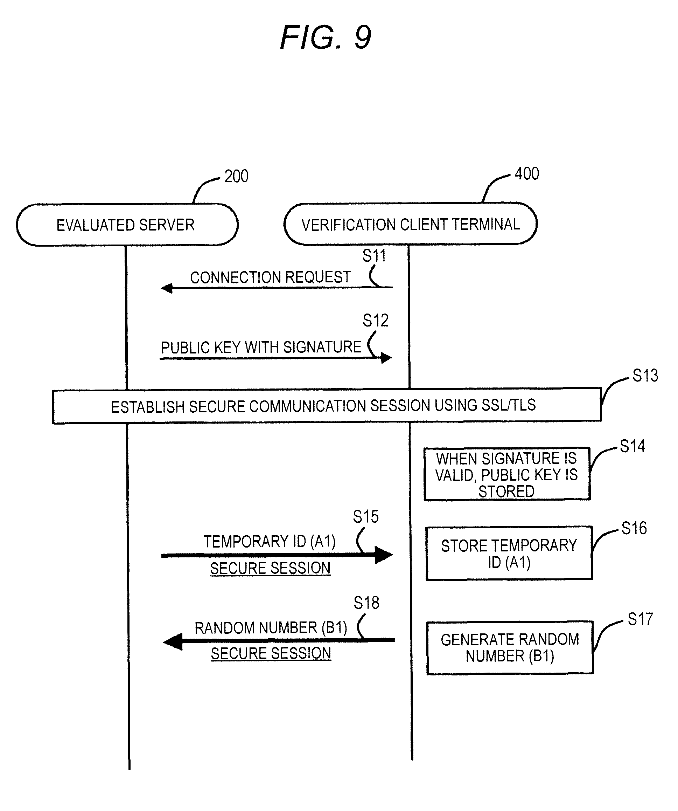

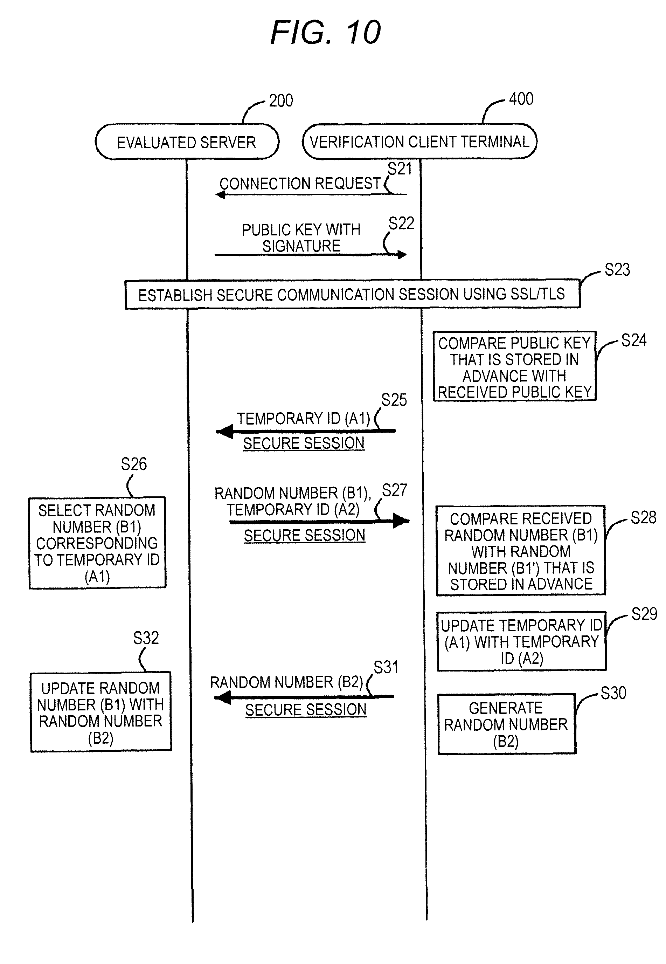

Next, the flow of data (the temporary ID and the random number) during the first connection and the second and subsequent connection between the evaluated server 200 and the verification client terminal 400 in Figs. 7 and 8 will be described with reference to Figs. 9 and 10. Figs. 9 and 10 show the flow of data in the detection of a spoofing site and the detection of a clone site.

Fig. 9 is a sequence diagram illustrating an example of the flow of data during the first connection.
First, the verification client terminal 400 transmits a request to connect the verification client terminal 400 and the evaluated server 200 to the evaluated server 200 (Step S11).

Then, the evaluated server 200 receives the connection request (corresponding to a Client Hello message in SSL) from the verification client terminal 400 and transmits a public key with a signature to the verification client terminal 400 (Step S12).

Then, the verification client terminal 400 performs a series of SSL server authentication processes for verifying whether the signature of the public key with a signature received from the evaluated server 200 is valid and establishes a secure communication session using SSL/TLS (Step S13). After the secure communication session is established, the verification client terminal 400 stores the public key (Step S14).

Steps S11 to S14 correspond to Steps S301 to S303 in Fig. 7.

Then, when the secure communication session is established, the evaluated server 200 generates a temporary ID (A1) and transmits the temporary ID (A1) to the verification client terminal 400 (Step S15). Then, the verification client terminal 400 stores the temporary ID (A1) (Step S16).

Then, the verification client terminal 400 generates a random number (B1) (Step S17) and transmits the random number (B1) to the evaluated server 200 (Step S18). In order to use the random number (B1) during the second connection, the verification client terminal 400 stores the generated random number (B1) in the random number/temporary ID management unit 402 (see Fig. 4). In addition, the evaluated server 200 stores the received random number (B1) in the random number/temporary ID management unit 204.

Steps S15 to S18 are not shown in Fig. 7.

Fig. 10 is a sequence diagram illustrating an example of the flow of data during the second and subsequent connection.
Before the process shown in Fig. 10 starts, it is assumed that the verification client terminal 400 stores the temporary ID (A1) and a random number (B1') in advance and the evaluated server 200 stores the random number (B1) as the random number corresponding to the temporary ID (A1) in advance.

First, the verification client terminal 400 transmits a request to connect the verification client terminal 400 and the evaluated server 200 to the evaluated server 200 (Step S21).

Then, the evaluated server 200 receives the connection request from the verification client terminal 400 and transmits a public key with a signature to the verification client terminal 400 (Step S22). Then, an SSL process is performed to establish a secure communication session (Step S23).

Then, the verification client terminal 400 compares the previously stored public key (for example, the public key used during the first connection) with the current public key received from the evaluated server 200 (Step S24).

Steps S21 to S24 correspond to Step S301 to S303 in Fig. 7.

Then, when the public keys are identical to each other, the verification client terminal 400 transmits the previously stored temporary ID (A1) to the evaluated server 200 (Step S25).

Then, the evaluated server 200 selects the previously stored random number (B1) corresponding to the temporary ID (A1) from the verification client terminal 400 and generates a temporary ID (A2) (Step S26). Then, the evaluated server 200 transmits the random number (B1) and the temporary ID (A2) to the verification client terminal 400 (Step S27).

Then, the verification client terminal 400 compares the received random number (B1) with the previously stored random number (B1') (Step S28). As a result of the comparison, when the random numbers are different from each other (B1≠B1'), it may be determined that the evaluated site is a clone site.

Then, the verification client terminal 400 updates the stored temporary ID (A1) with the received temporary ID (A2) and stores the temporary ID (A2) in the random number/temporary ID management unit 402 (Step S29).

Then, the verification client terminal 400 generates a random number (B2) (Step S30) and transmits the random number (B2) to the evaluated server 200 (Step S31). Then, the evaluated server 200 updates the stored random number (B1) with the received random number (B2) and stores the random number (B2) in the random number/temporary ID management unit 402 (Step S32).

Steps S25 to S32 correspond to Steps S304 to S307 in Fig. 7.

According to the operation of the dangerous site detecting system 1 during the first connection and the second and subsequent connection shown in Figs. 9 and 10, even when a clone site of the evaluated site is created, it is possible to detect the clone site since there is a difference in the random numbers between the clone site and the original site before and after the update of the random number (B). That is, the temporary ID (A) and the random number (B) are changed each time the verification client terminal 400 accesses the evaluated server 200, which makes it possible to improve security.

In Step S23 and S24, the verification client terminal 400 may compare the public keys, and SSL server authentication may succeed even when it is determined that the public keys are not identical to each other. In Step S28, the random numbers may be compared, and the evaluated server 200 may determine that the site is not a clone site when it is determined that the random numbers are identical to each other. In this case, the verification client terminal 400 stores the public key received in Step S23 as a new public key. As such, the dangerous site detecting system 1 may update the public key of the evaluated server 200 that is registered once. However, in general, since the public key is not frequently updated, an allowable update interval may be set to the security policy. When the update interval is less than the allowable update interval, the update may be determined to be fraudulent and verification may be determined to fail.

According to the dangerous site detecting system 1 of this embodiment, for example, since EV-SSL and paid software are not used, the cost of the system is low. In addition, when the invention is used for a site corresponding to EV-SSL, it is possible to improve resistance to spoofing.

### (Second embodiment)

In this embodiment, a process of checking the degree of validity of the evaluation result of the evaluated server 200 (evaluated site) by the evaluating client terminal 300, that is, a process of checking the validity of the evaluation result is performed.

The basic structure of a dangerous site detecting system according to this embodiment is the same as that shown in Fig. 1 except for the detailed structure of the evaluating client terminal and the verification client terminal. A general evaluating client terminal is configured so as to include both the structure of the evaluating client terminal 300 according to the first embodiment and the structure of an evaluating client terminal 300B according to this embodiment. In addition, a general verification client terminal is configured so as to include both the structure of the verification client terminal 400 according to the first embodiment and the structure of a verification client terminal 400B according to this embodiment.

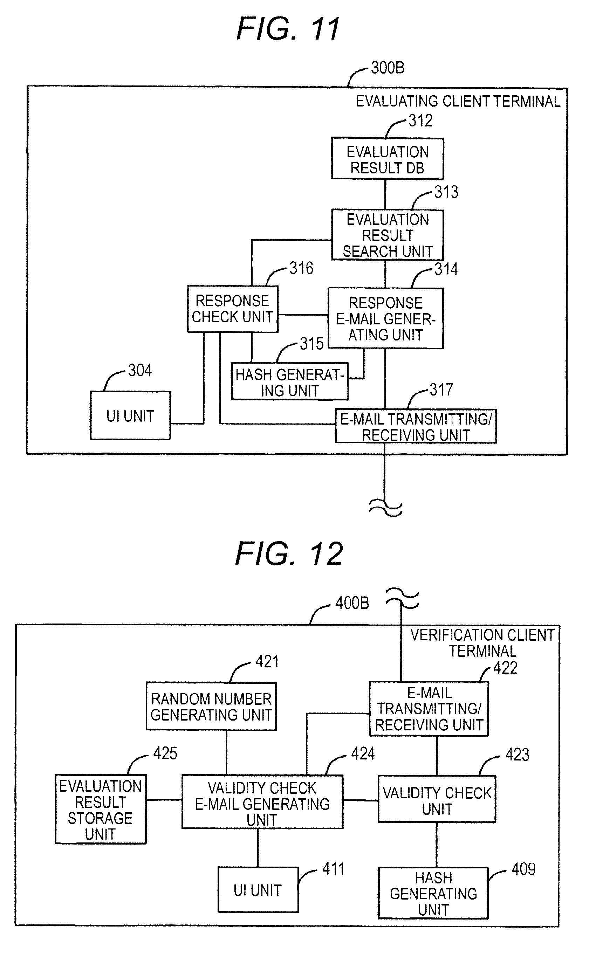

Fig. 11 is a block diagram illustrating an example of the detailed structure of the evaluating client terminal 300B according to this embodiment. Fig. 12 is a block diagram illustrating an example of the detailed structure of the verification client terminal 400B according to this embodiment. In Figs. 11 and 12, the same components as those in the evaluating client terminal 300 and the verification client terminal 400 according to the first embodiment are denoted by the same reference numerals and a description thereof will be omitted or the same components will be described in brief.

The evaluating client terminal 300B includes an evaluation result DB 312, an evaluation result search unit 313, a response e-mail generating unit 314, a hash generating unit 315, a response check unit 316, a e-mail transmitting/receiving unit 317, and a UI unit 304.

The evaluation result DB 312 stores the same information as the evaluation result stored by the evaluation result generating unit 302 shown in Fig. 5.

The evaluation result search unit 313 searches the evaluation result, which is a search target, from one or more evaluation results with reference to the evaluation result DB 312.

The response e-mail generating unit 314 generates a e-mail to be transmitted to, for example, another terminal.

The hash generating unit 315 performs an operation on predetermined information using a predetermined hash function to calculate a hash value.

The response check unit 316 checks the content of the e-mail received by the e-mail transmitting/receiving unit 317 and transmits a control command to the evaluation result search unit 313, the response e-mail generating unit 314, and the hash generating unit 315 according to the content of the e-mail.

The e-mail transmitting/receiving unit 317 receives a e-mail from, for example, another terminal. In addition, the e-mail transmitting/receiving unit 317 transmits a e-mail to, for example, another terminal.

The verification client terminal 400B includes a random number generating unit 421, a e-mail transmitting/receiving unit 422, a validity check unit 423, a validity check e-mail generating unit 424, an evaluation result storage unit 425, a hash generating unit 409, and a UI unit 411.

The random number generating unit 421 generates random numbers and stores the random numbers.

The e-mail transmitting/receiving unit 422 receives a e-mail from, for example, another terminal. In addition, the e-mail transmitting/receiving unit 422 transmits a e-mail to, for example, another terminal.

The validity check unit 423 performs a determination operation required to check the validity of the evaluation result. For example, the validity check unit 423 determines whether the generated random number is identical to the received random number or determines whether the generated hash value is identical to the received hash value.

The validity check e-mail generating unit 424 generates a e-mail to be transmitted to, for example, another terminal.

The evaluation result storage unit 425 stores the same information as the evaluation result stored by the evaluation result collecting unit 407 shown in Fig. 4.

Next, the process of checking the validity of the evaluation result will be described.

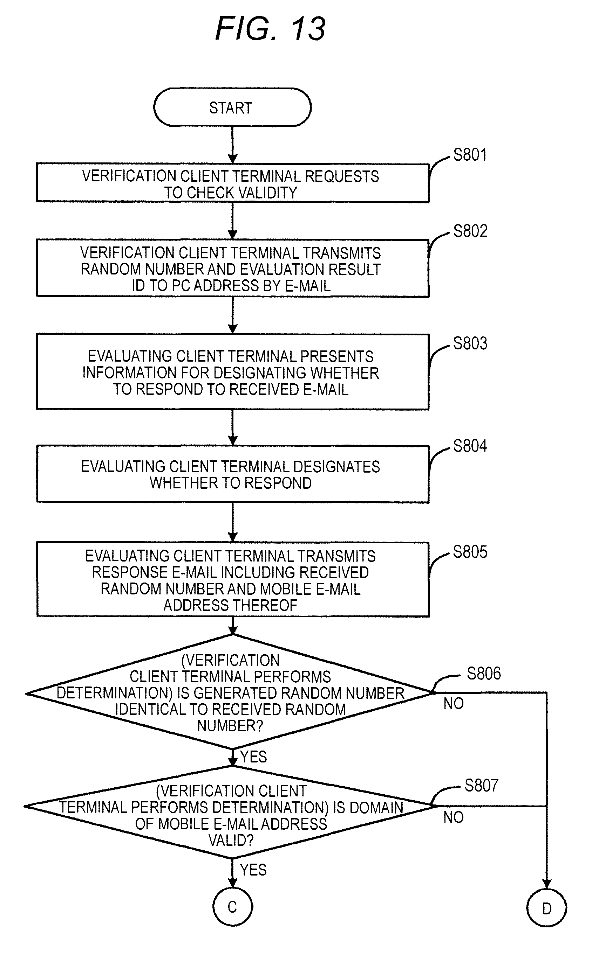

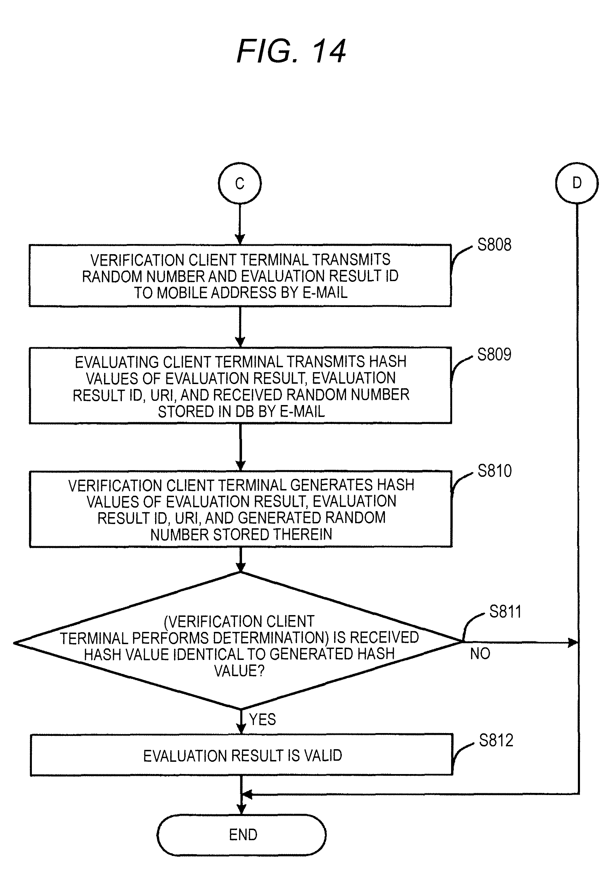

Figs. 13 and 14 are flowcharts illustrating an example of the process of checking the evaluation result of the evaluated server 200 (evaluated site). In general, the process shown in Figs. 13 and 14 is periodically performed in parallel to the process according to the first embodiment shown in Fig. 2. When the mobile e-mail address of the evaluating client terminal 300B is not included in the evaluation result, it is assumed that the PC e-mail address of the owner of the evaluating client terminal 300B is included in the evaluation result.

First, in the verification client terminal 400B, the e-mail transmitting/receiving unit 422 transmits a request to check the validity of the evaluation result in response to an instruction input through the UI unit 411 (Step S801). The check request is transmitted to the PC e-mail address shown in Step S802. A mobile phone is considered as the evaluating client terminal 300B. The mobile phone can receive the e-mail transmitted to the PC e-mail address. Step S801 may be performed together with Step S802.

Then, in the verification client terminal 400B, the random number generating unit 421 generates a random number. The validity check e-mail generating unit 424 acquires the evaluation result ID of the evaluation result whose validity is desired to be checked and which is stored in the evaluation result storage unit 425, in response to an instruction input through the UI unit 411. Then, the validity check e-mail generating unit 424 generates a e-mail including the information of the generated random number and the acquired evaluation result ID. Then, the e-mail transmitting/receiving unit 422 acquires the identification information (in this embodiment, the PC e-mail address) of the evaluating client terminal 300B stored in the evaluation result storage unit 425 and transmits the generated e-mail to the acquired PC e-mail address (Step S802).

Then, in the evaluating client terminal 300B, the e-mail transmitting/receiving unit 317 receives the e-mail from the verification client terminal 400B. Then, the response check unit 316 checks the content of the e-mail. Then, the UI unit 304 presents information for designating whether there is a response to the e-mail (Step S803). Then, the UI unit 411 designates whether there is a response (Step S804).

Then, in the evaluating client terminal 300B, the response e-mail generating unit 314 generates a response e-mail including the random number received from the verification client terminal 400B and the mobile e-mail address of the evaluating client terminal 300B stored in a storage unit (not shown). Then, the e-mail transmitting/receiving unit 317 transmits the generated response e-mail to the verification client terminal 400B (Step S805).

In Steps S801 to S805, even when the mobile e-mail address which is used by the evaluating client terminal and is included in the evaluation result is not desired to be opened to the public through the Internet (even when the mobile e-mail address is not included in the evaluation result), it is possible to notify the mobile e-mail address to the verification client terminal 400B. In addition, when the mobile e-mail address is included in the evaluation result, Steps S802 to S806 may be omitted.

Then, in the verification client terminal 400B, the validity check unit 423 determines whether the random number generated by the random number generating unit 421 is identical to the random number included in the response e-mail received by the e-mail transmitting/receiving unit 422 (Step S806). When the random numbers are identical to each other, it is possible to verify whether the destination address of the e-mail in Step S802 is identical to the source address of the response e-mail in Step S805 on the basis of the random numbers even when a "From" row of the PC e-mail from the evaluating client terminal is tampered with. Therefore, it is possible to know the transmission of the mobile e-mail address from the PC e-mail address included in the evaluation information. Then, the validity check unit 423 determines whether the domain of the mobile e-mail address is valid (that is, whether the domain of the mobile e-mail address indicates a valid mobile phone manufacturer and is reliable) (Step S807). When the domain of the mobile e-mail address is valid, the e-mail transmitting/receiving unit 422 transmits a e-mail including the random number and the evaluation result ID to the mobile e-mail address included in the received response e-mail (Step S808). The random number and the evaluation result ID transmitted in Step S808 are the same as those transmitted in Step S802.

Then, the evaluating client terminal 300B receives the e-mail from the verification client terminal 400B. Then, the response check unit 316 checks the content of the e-mail. The evaluation result search unit 313 acquires the evaluation result from the evaluation result DB 312 using the received evaluation result ID as a key. Then, the hash generating unit 315 generates the hash values of the evaluation result, the evaluation result ID, the random number (the random number from the verification client terminal 400B), and the identification information (for example, site identification information such as the URI of an evaluated site) of the evaluated server 200. Then, the response e-mail generating unit 314 generates a response e-mail including the information of the hash values and the e-mail transmitting/receiving unit 317 transmits the response e-mail to the verification client terminal 400B (Step S809).

Then, in the verification client terminal 400B, the hash generating unit 409 generates the hash values of the evaluation result, the evaluation result ID, the random number, and the identification information (for example, site identification information such as the URI of an evaluated site) of the evaluated server 200 which are stored in the verification client terminal 400B (Step S810). Then, the validity check unit 423 determines whether the hash values generated by the hash generating unit 409 are identical to the hash values included in the response e-mail received by the e-mail transmitting/receiving unit 422 (Step S811). When the hash values are identical to each other, the validity check unit 423 determines that the evaluation result is valid (Step S812). Even when a "From" row of the mobile phone e-mail from the evaluating client terminal is tampered with, it is possible to verify whether the destination address of the e-mail in Step S808 is identical to the source address of the response e-mail in Step S809 on the basis of the random numbers. Therefore, it is possible to know there is a response from the mobile phone, which is the destination of the e-mail.

As such, according to the dangerous site detecting system of this embodiment, it is possible to check the validity of the evaluation result of the evaluated server 200 (evaluated site). In this embodiment, a mobile phone terminal is considered as the evaluating client terminal 300B. When purchasing a mobile phone terminal, the person needs to present, for example, his or her identification card, which results in an increase in reliability. The owner of the mobile phone terminal is likely to carry the mobile phone terminal all the time and it is possible to verify whether the mobile phone terminal is moved using, for example, a GPS function. In addition, it is possible to authenticate the actual user of the mobile phone terminal using PIN or fingerprint authentication. Therefore, when the mobile phone terminal is used as the evaluating client terminal 300B, the evaluation result is not fraudulently opened to the public by, for example, a bot or it is not invalid due to automatic tampering, but it is evaluated to be valid by instructions from the user. Therefore, the evaluation result is reliable.
The confirmation e-mail of the evaluation result from the verification client terminal 400B may be automatically transmitted according to the security policy without passing through the UI unit 411. Similarly, a response e-mail corresponding to the confirmation e-mail may be automatically transmitted according to the security policy without passing through the UI unit 411. However, in order to ensure security, the response e-mail may pass through the UI unit 411 at a predetermined ratio within the range in which the convenience of the estimator does not deteriorate.

The invention has been described in detail above with reference to specific embodiments, but it will be understood by those skilled in the art that various modifications or changes can be made without departing from the scope and spirit of the invention.
This application is based on Japanese Patent Application No. 2009-007723, filed January 16, 2009, the content of which is incorporated herein by reference.

### Industrial Applicability

The invention is useful for, for example, a server authentication method, a client terminal, and a dangerous site detecting system capable of reliably detecting a dangerous site.

### Description of Reference Signs

- 1:: DANGEROUS SITE DETECTING SYSTEM
- 100:: EVALUATING SERVER
- 200:: EVALUATED SERVER
- 201:: SIGNATURE GENERATING UNIT
- 202:: HASH GENERATING UNIT
- 203:: TEMPORARY ID GENERATING UNIT
- 204:: RANDOM NUMBER/TEMPORARY ID MANAGEMENT UNIT
- 205:: UNIQUENESS INFORMATION GENERATING UNIT
- 206:: CLIENT CONNECTION UNIT
- 207:: PAGE STORAGE UNIT
- 208:: VALIDITY INFORMATION GENERATING UNIT
- 209:: INTEGRITY INFORMATION GENERATING UNIT
- 300, 300B:: EVALUATING CLIENT TERMINAL
- 301:: SITE CONNECTION UNIT
- 302:: EVALUATION RESULT GENERATING UNIT
- 303:: EVALUATION RESULT ID GENERATING UNIT
- 304:: UI UNIT
- 312:: EVALUATION RESULT DB
- 313:: EVALUATION RESULT SEARCH UNIT
- 314:: RESPONSE E-MAIL GENERATING UNIT
- 315:: HASH GENERATING UNIT
- 316:: RESPONSE CHECK UNIT
- 317:: E-MAIL TRANSMITTING/RECEIVING UNIT
- 400, 400B:: VERIFICATION CLIENT TERMINAL
- 401:: PUBLIC KEY MANAGEMENT UNIT
- 402:: RANDOM NUMBER/TEMPORARY ID MANAGEMENT UNIT
- 403:: SITE CONNECTION UNIT
- 404:: VALIDITY VERIFYING UNIT
- 405:: UNIQUENESS VERIFYING UNIT
- 406:: TAMPERING VERIFYING UNIT
- 407:: EVALUATION RESULT COLLECTING UNIT
- 408:: CONNECTION DETERMINING UNIT
- 409:: HASH GENERATING UNIT
- 410:: RESULT REFLECTING UNIT
- 411:: UI UNIT
- 412:: PAGE DECODING UNIT
- 421:: RANDOM NUMBER GENERATING UNIT
- 422:: E-MAIL TRANSMITTING/RECEIVING UNIT
- 423:: VALIDITY CHECK UNIT
- 424:: VALIDITY CHECK E-MAIL GENERATING UNIT
- 425:: EVALUATION RESULT STORAGE UNIT

## Claims

1. A server authentication method in a communication system comprising an evaluated server, which is targeted for evaluation, and a client terminal capable of communicating with the evaluated server, said server authentication method comprising:
a step, performed by the client terminal establishing a secure communication path with the evaluated server and receiving a public key of the evaluated server during the establishment;
a step, performed by the client terminal, of transmitting a first ID to the evaluated server through the secure communication path;
a step, performed by the client terminal, of receiving a second ID and a first random number from the evaluated server through the secure communication path;
a step, performed by the client terminal, of determining that the evaluated server is valid when the received first random number corresponds to the transmitted first ID and a public key stored in a public key management unit configured to manage the public key in advance is identical to the received public key; and
a step, performed by the client terminal, of transmitting a second random number corresponding to the second ID to the evaluated server through the secure communication path when the evaluated server is determined to be valid.

2. The server authentication method according to claim 1, further comprising:
a step, performed by the client terminal, of receiving the first ID from the evaluated server through the secure communication path when the client terminal requests access to the evaluated server for the first time; and
a step, performed by the client terminal, of transmitting the first random number corresponding to the first ID to the evaluated server through the secure communication path

3. The server authentication method according to claim 1 or 2, further comprising:
a step, performed by the evaluated server, of calculating a hash value for each kind of content stored in a content storage unit;
a step, performed by the evaluated server, of calculating a signature from the calculated hash value based on the public key of the evaluated server and transmitting the signature together with the content;
a step, performed by the client terminal, of receiving the signature and the content;
a step, performed by the client terminal, of calculating the hash value of the received content; and
a step, performed by the client terminal, of decoding the received content when the received signature is determined to be valid by verifying the received signature using the calculated hash value and the public key stored in the public key management unit in advance.

4. The server authentication method according to any one of claims 1 to 3, further comprising:
a step, performed by the client terminal, of acquiring an evaluating server identification information for identifying an evaluating server configured to store an evaluation result of the evaluated server from the evaluated server;
a step, performed by the client terminal, of acquiring the evaluation result of the evaluated server from the evaluating server based on the evaluating server identification information; and
a step, performed by the client terminal, of determining whether to permit access to the evaluated server based on the acquired evaluation result of the evaluated server and a predetermined security policy.

5. The server authentication method according to any one of claims 1 to 4, further comprising:
a step, performed the client terminal, of transmitting evaluation result identification information for identifying the evaluation result, which is targeted for evaluation, and a third random number to an evaluating terminal configured to evaluate the evaluated server by e-mail;
a step, performed by the client terminal, of storing the third random number in an evaluation result storage unit configured to store the evaluation result and the evaluation result identification information;
a step, performed by the evaluating terminal, of receiving the evaluation result identification information and the third random number by e-mail;
a step, performed by the evaluating terminal, of calculating hash values of the evaluation result corresponding to the evaluation result identification information, the evaluation result identification information, and the received third random number;
a step, performed by the evaluating terminal, of transmitting the hash values to the client terminal by e-mail;
a step, performed by the client terminal, of receiving the hash values by e-mail;
a step, performed by the client terminal, of calculating the hash values of the evaluation result, the evaluation result identification information, and the third random number stored in the evaluation result storage unit; and
a step, performed by the client terminal, of determining that the evaluation result is valid when the hash values received by e-mail are identical to the calculated hash values and a domain of a destination e-mail address is valid.

6. The server authentication method according to claim 5, further comprising:
a step, performed by the evaluating terminal configured to evaluate the evaluated server, of transmitting the evaluation result to the evaluating server.

7. The server authentication method according to claim 5 or 6, the evaluating terminal is a mobile phone terminal.

8. A client terminal capable of communicate with an evaluated server which is targeted for evaluation, said client terminal comprising:
a public key receiving unit configured to establish a secure communication path with the evaluated server and to receive a public key of the evaluated server during the establishment;
a transmitting unit configured to transmit a first ID to the evaluated server through the secure communication path;
an ID/random number receiving unit configured to receive a second ID and a first random number from the evaluated server through the secure communication path; and
a determining unit configured to determine that the evaluated server is valid when the first random number received by the ID/random number receiving unit corresponds to the first ID transmitted by the transmitting unit and a public key stored in a public key management unit configured to the public key in advance is identical to the public key received by the public key receiving unit,
wherein when the evaluated server is determined to be valid, the transmitting unit transmits a second random number corresponding to the second ID to the evaluated server through the secure communication path.
